# EUROPEAN PATENT APPLICATION

(11) **EP 4 165 988 A1**
(43) Date of publication of application: **19.04.2023**
(21) Application number: 21215093.2
(22) Date of filing: 16.12.2021
(51) Int. Cl.: A01N 25/06, A01P 7/04, B05B 5/047, C09K 3/30

(54) **USE OF AN AEROSOL COMPOSITION AND METHOD TO CONTROL HIDDEN FLYING INSECTS**

(30) Priority: 18.10.2021 IN 202141047104
(71) Applicant: Reckitt & Colman (Overseas) Hygiene Home Limited, Slough, Berkshire SL1 3UH (GB)
(72) Inventor: ABELA, Mario, Sydney, 2000 (AU); DAS, Avijit, 122001 Gurugram (IN); Dyson, Alistair Robin, Hull, HU8 7DS (GB); HELENO, Rodrigo Alves, 05577-900 Sao Paulo (BR); JOSHI, Lakshay, 122001 Gurugram (IN); MAKKAPATI, Anil Kumar, 122001 Gurugram (IN); MARTINS, Mariana Even Oliveira, 05577-900 Sao Paulo (BR); NIEMIEC, Anna, 05577-900 Sao Paulo (BR); RUDKIN, Scott, Hull, HU8 7DS (GB); SHANMUGAM PERUMAL, Shanthakumar, 122001 Gurugram (IN); SHEEHY, Daniel James, Sydney, 2000 (AU); VERONEZE, Rafael, 05577-900 Sao Paulo (BR)
(74) Representative: Paredes Rojas, José Francisco

(57) **Abstract**

The present invention relates to a use of an aerosol composition to kill, knockdown and/or repel hidden flying insects, wherein the composition is an electrically neutral composition in the form of a water-in-oil emulsion or an oil-in-water emulsion, in which droplets of the emulsion on discharge from an aerosol spray device are imparted with a unipolar electrostatic charge. The invention also relates to a method of killing, repelling and/or reducing the quantity of insects in the air, wherein the insects are hidden flying insects; the method comprising spraying into the air an aerosol composition, wherein the composition is sprayed from an aerosol spray device which is mechanically operated under pressure.

## Description

The present invention relates to the use of an aerosol composition to kill, knockdown and/or repel hidden flying insects, in particular, mosquitoes. The invention also relates to a method of killing, repelling and/or reducing the quantity of insects in the air, wherein the insects are hidden flying insects.

### Background

The present invention relates to the use of an aerosol composition to kill, knockdown and/or repel hidden flying insects, in particular, mosquitoes. In the aerosol composition disclosed in the present patent application, the droplets are imparted with an electrostatic charge on spraying from an aerosol spray device and in which the electrostatic charge on the droplets is maximized through the inclusion in the compositions of certain selected components and the characteristics of the aerosol spray device.

Aerosol spray devices are a convenient form in which a variety of useful products, such as insecticides, air fresheners, antiperspirants, hair sprays, horticultural products, waxes and polishes, oven cleaners, starches and fabric finishes, shoe and leather care products, glass cleaners and various other household, institutional, professional or industrial products, can be dispensed.

The utility of aerosol spray devices resides in the ability to readily deliver the composition contained within the device in the form of fine droplets to the target area, for example the spraying of an insecticide onto target insects.

In WO 99/01227 there is described a method of killing flying insects by liquid droplets of an insecticidal composition onto the insects. In this method, a unipolar charge is imparted to the liquid droplets by double layer charging and charge separation during spraying, the unipolar charge being at a level such that the said liquid droplets have a charge to mass ratio of at least +/- 1 x 10⁻⁴ C/kg. An apparatus for imparting the unipolar charge of this magnitude to a liquid composition is also described.

In WO 01/18145 there is described an electrically neutral composition in the form of a water-in-oil or oil-in-water emulsion, in which the droplets of the emulsion on discharge from an aerosol spray device are imparted with a unipolar electrostatic charge. The liquid droplets have a charge to mass ratio of at least +/- 1 x 10⁻⁴ C/kg. The higher the charge to mass ratio of the liquid droplets, the more effective the liquid droplets will be for their intended use, such as precipitating airborne particles and targeting insects.

In GB1445813 there is described an aqueous pressurized spray composition comprising a pyrethroid, an ortho-substituted phenol, a non-ionic surfactant and a propellant. This composition exhibits good flushing characteristics against crawling insects.

Pest control products, when used against mosquitoes in free-living adult stages, can be applied in two ways: i) release into the air in the form of a vapour or aerosol, or ii) application to a surface as a spray or deposit or impregnation for prolonged action.

One drawback of the release of pest control into the air in the form of a vapour or aerosol, such as a spray or an aerosol, is that sprays and aerosols might not be effective against mosquitos, in particular mosquitos of the genus *Aedes,* partly because these tend to rest indoors on objects that cannot be sprayed, like curtains, clothes and furniture.

Therefore, it is an object of the present invention to provide the use of an aerosol composition to kill, knockdown and/or repel hidden flying insects, in particular, mosquitoes.

It is another object of the present invention to provide a method of killing, repelling and/or reducing the quantity of insects in the air, wherein the insects are hidden flying insects.

The present inventors have found that by charging the liquid droplets of a water-in-oil or an oil-in-water composition during the spraying operation the composition has a better dispersion in the air, and it can reach hidden flying insects, in particular, mosquitoes.

### Summary of the invention

In a first aspect, the present invention relates to the use of an aerosol composition to kill, knockdown and/or repel hidden flying insects, in particular, mosquitoes, wherein the composition is an electrically neutral composition in the form of a water-in-oil or an oil-in-water emulsion, in which droplets of the emulsion on discharge from an aerosol spray device are imparted with a unipolar electrostatic charge, which composition comprises:
a) at least one propellant in an amount of from 2 to 80 wt.%, based on the total weight of the composition;
b) at least one non-ionic surfactant in an amount of from 0.01 to 10 wt.%, based on the total weight of the composition;
c) one or more oils or solvents, preferably aliphatic, linearly conjugated or aromatic, within the oil phase in an amount of up to 80 wt.%, based on the total weight of the composition preferably up to 40 wt.%, more preferably up to 20 wt.%, even more preferably between 1 wt.% and 15 wt.%, most preferably between 2.5 wt.% and 10 wt.%;
d) water; and
e) at least one insecticidal compound.

In an embodiment, the composition comprises between 10 wt.% and 80 wt.% of water, based on the total weight of the composition, preferably between 20 wt.% and 75 wt.%, more preferably between 30 wt.% and 70 wt.%, even more preferably between 40 wt.% and 65 wt.%, most preferably between 45 wt.% and 60 wt.%, such as for example, between 50 wt.% and 55 wt.%.

In an embodiment the at least one non-ionic surfactant is selected from the group consisting of polyglyceryl fatty acid esters, polyoxyethylene sorbitan monooleate, sorbitan monooleate, and combinations thereof.

In another embodiment, the one or more oils or solvents are selected from the group consisting of n-paraffins and iso-paraffins.

In an embedment, the at least one insecticidal compound is selected from the group consisting of cypermethrin, tetramethrin, permethrin, cyfluthrin, transfluthrin, allethrins, and combinations thereof; preferably selected from the group consisting of permethrin, cyfluthrin, transfluthrin, allethrins, and combinations thereof; more preferably selected from the group consisting of permethrin, cyfluthrin, transfluthrin, bioallethrin, esbiothrin, and combinations thereof; even more preferably selected from the group consisting of permethrin, cyfluthrin, transfluthrin, esbiothrin, and combinations thereof.

In another embodiment, the insecticidal compound comprises or consists of:
- allethrins, preferably esbiothrin, and permethrin, or
- permethrin and transflutrin, or
- cyfluthrin and transfluthrin.

In an embodiment, the composition comprises between 0.001 wt.% and 10 wt.% of the at least one insecticidal compound, based on the total weight of the composition, preferably between 0.005 wt.% and 5 wt.%, more preferably between 0.01 wt.% and 1 wt.%, even more preferably between 0.05 wt.% and 0.5%, most preferably between 0.05 wt.% 0.25 wt.%.

In a preferred embodiment, the flying insects are mosquitoes, preferably mosquitoes of the genus *Aedes,* more preferably of the species *Aedes aegypti.*

In a second aspect, the present invention relates to a method of killing, repelling and/or reducing the quantity of insects in the air, wherein the insects are hidden flying insects; the method comprising spraying into the air an aerosol composition, wherein the composition is sprayed from an aerosol spray device which is mechanically operated under pressure, the aerosol spray device comprising:
i) a reservoir for accommodating the aerosol composition;
ii) a spraying head, in the form of an insert in an actuator, through which the aerosol composition is expelled in the form of a spray of droplets; and
iii) a conduit system for feeding the aerosol composition from the reservoir to the spraying head wherein:
   a) the spraying head has a bore through which the aerosol composition is expelled from the apparatus, the bore having an outlet having an L/a ratio of at least 10, where L is the length of the periphery defining the bore outlet in mm and a is the cross sectional area of the bore outlet in mm² ; and
   b) the apparatus is constructed such that the droplets are expelled from the spraying head at a flow rate of at least 0.5 g/s and have a charge to mass ratio of at least +/- 1 x 10⁻⁴ C/kg;
   and
iv) a tail piece which includes a vapour phase tap, which is an opening to enable gas in the reservoir to act directly on the aerosol composition, said opening having a diameter of at least 0.60 mm wherein the aerosol composition is an electrically neutral composition in the form of a water-in-oil emulsion or an oil-in-water emulsion, in which droplets of the emulsion on discharge from the aerosol spray device are imparted with a unipolar electrostatic charge, the aerosol composition comprising:
   a) at least one propellant in an amount of from 2 wt.% to 80 wt.%, based on the total weight of the composition; preferably between 10 wt.% and 70 wt.%, more preferably between 20 wt.% and 60 wt.%, even more preferably between 30 wt.% and 50 wt.%, most preferably between 35 wt.% and 45 wt.%.
   b) at least one non-ionic surfactant in an amount of from 0.01 wt.% to 10 wt.%, based on the total weight of the composition, preferably between 0.05 wt.% and 8 wt.%, more preferably between 0.1 wt.% and 6 wt.%, even more preferably between 0.25 wt.% and 4 wt.%, most preferably between 0.25 wt.% and 2.5 wt.%;
   c) one or more oils or solvents, preferably aliphatic, linearly conjugated or aromatic, within the oil phase in an amount of up to 80 wt.%, based on the total weight of the composition, preferably up to 40 wt.%, more preferably up to 20 wt.%, even more preferably between 1 wt.% and 15 wt.%, most preferably between 2.5 wt.% and 10 wt.%;
   d) at least one insecticidal compound; and
   e) water.

In one embodiment, the L/a ratio is at least 12.

In another embodiment, the vapour phase tap has a diameter of between 0.60 mm and 2mm, more preferably between 0.65 mm and 1.5 mm, even more preferably between 0.7 mm and 1.25 mm, most preferably between 0.7 mm and 1.1 mm.

In an embodiment, the insert is made of a polymeric material, preferably a polymeric material selected from the group consisting of acetal, polyester, polyvinyl chloride, nylon, polypropylene, and combinations thereof, more preferably the insert is made of acetal.

In another embodiment, the flow rate of the aerosol composition sprayed from the aerosol spray device is of at least 1 g/s, preferably between 1g/s and 10g/s, more preferably between 1.25 g/s and 5 g/s, even more preferably between 1.5 g/s and 2.5 g/s.

In an embodiment, the composition is sprayed into the air in a room having a volume of at most 100 m³, preferably at most 75 m³, more preferably at most 50 m³, even more preferably at most 30 m³, most preferably at most 20 m³.

In another embodiment, the composition is sprayed into the air at a distance of at least 1m from the place where the flying insects are located, preferably at least 1.5 m, more preferably at least 2 m, even more preferably at a distance between 2 m and 3 m .

### Definitions

The following definitions are used in the present application.

"Hidden flying insects" as used in the present application means: flying insects that are not visible to the normal eye having 20/20 vision and therefore a pest control composition cannot be directly applied onto them. In other words, these are insects located, for example, behind a curtain, inside a piece of furniture, or behind or between clothes.

"Knock-down test for hidden insects" as used in the present application means: experiments performed in a 20m³ chamber having a mini chamber of 10cm x 10cm x 10cm size (1×10⁻³ m³). The mini chamber is located on a wall of the 20m³ chamber and 1m above the ground, i.e., the mini chamber is located substantially in the middle of a wall of the 20m³ chamber. A curtain made of a textile, for example polyester, is placed in the centre of the 20m³ chamber and 2m away from the spraying point. The mini chamber has apertures which enable air flow into and through the mini chamber. 5 female *Aedes aegypti* mosquitoes are released inside the mini chamber. The mosquitoes are 3-5 days old. The aerosol compositions are tested by spraying the compositions at 2m in direction to the small chamber, which is located behind the curtain. The aerosol composition is sprayed for about 3 seconds. Subsequently, a trained experimenter enters the chamber and records the knock-down values inside the chamber at 1-minute interval up to 10 minutes; after this, the values are recorded at 5-minute interval until the knock-down percentage is 100 (100% KD) or 30 minutes post spraying, whichever occurs first.

"Knock-down percentage" or "% KD", as used in the present application means: the percentage of insects that after contact with a (sub)lethal dose of an insect control composition cannot move, take off or stand, with respect to the initial number of insects at the beginning of an experiment.

### Detailed description of the invention

In a first aspect, the present invention relates to the use of an aerosol composition to kill, knockdown and/or repel hidden flying insects, wherein the composition is an electrically neutral composition in the form of a water-in-oil emulsion or an oil-in-water emulsion, in which droplets of the emulsion on discharge from an aerosol spray device are imparted with a unipolar electrostatic charge, which composition comprises:
a) at least one propellant in an amount of from 2 wt.% to 80 wt.%, based on the total weight of the composition; preferably between 10 wt.% and 70 wt.%, more preferably between 20 wt.% and 60 wt.%, even more preferably between 30 wt.% and 50 wt.%, most preferably between 35 wt.% and 45 wt.%.
b) at least one non-ionic surfactant in an amount of from 0.01 wt.% to 10 wt.%, based on the total weight of the composition, preferably between 0.05 wt.% and 8 wt.%, more preferably between 0.1 wt.% and 6 wt.%, even more preferably between 0.25 wt.% and 4 wt.%, most preferably between 0.25 wt.% and 2.5 wt.%;
c) one or more oils or solvents, preferably aliphatic, linearly conjugated or aromatic, within the oil phase in an amount of up to 80 wt.%, based on the total weight of the composition, preferably up to 40 wt.%, more preferably up to 20 wt.%, even more preferably between 1 wt.% and 15 wt.%, most preferably between 2.5 wt.% and 10 wt.%;
d) at least one insecticidal compound; and
e) water.

In the compositions used in the present invention, the electron transfer through the emulsion leads to liquid droplets of the water-in-oil or the oil-in-water composition, which become charged during the spraying operation; this enables a better dispersion of the composition in the air, and hence, it can reach hidden flying insects, in particular, mosquitoes.

### Propellants

One or more propellants are used in the composition of the invention in a total amount of from 2 wt.% to 80 wt.%. Amongst the propellants that may be used are hydrocarbons and compressed gas, of which hydrocarbons are preferred.

Hydrocarbon propellants which may be used are acetylene, methane, ethane, ethylene, propane, nbutane, n-butene, isobutane, isobutene, pentane, pentene, isopentane and isopentene. Mixtures of these propellants may also be used. Commercially available propellants typically contain a number of hydrocarbon gases. For example, an odorised commercial butane, contains predominantly n-butane and some iso-butane together with small amounts of propane, propene, pentane and butene.

Preferred hydrocarbon propellants include propane, n-butane, isobutane, pentane and isopentane, whilst the most preferred are propane, iso-butane and n-butane.

Particularly preferred hydrocarbon propellants are mixtures of propane, n-butane and iso-butane.

In a preferred embodiment the propellant is liquefied petroleum gas, also known as LPG and LP gas.

The aerosol composition comprises at least one propellant in an amount of from 2 wt.% to 80 wt.%, based on the total weight of the composition; preferably between 10 wt.% and 70 wt.%, more preferably between 20 wt.% and 60 wt.%, even more preferably between 30 wt.% and 50 wt.%, most preferably between 35 wt.% and 45 wt.%.

### Non-ionic surfactants

Non-ionic surfactants for use in the present invention include mono, di and tri sorbitan esters, polyoxyethylene mono, di and tri sorbitan esters; mono and polyglyceryl esters; alkoxylated alcohols; alkoxylated amines; alkoxylated acids; amine oxides; ethoxylated/proproxylated block copolymers; alkoxylated alkanolamides; and alkoxylated alkyl phenols.

In a preferred embodiment, the at least one non-ionic surfactant is selected from the group consisting of polyglyceryl fatty acid esters, polyoxyethylene sorbitan monooleate, sorbitan monooleate, and combinations thereof.

Particularly preferred are those surfactants which contain at least one alkyl, allyl or substituted phenyl group containing at least one C₆ to C₂₂ carbon chain. Examples are esters with C₁₀-C₂₂ fatty acids, preferably C₁₂-C₁₈ fatty acids, particularly polyglycerol oleate and ethoxylated fatty alcohols, such as oleyl alcohol ethoxylated with two moles of ethylene oxide. Further examples are the polyethylene glycol oleates, such as PEG-4 oleate, PEG-8 oleate and PEG-12 oleate.

The aerosol composition comprises at least one non-ionic surfactant in an amount of from 0.01 wt.% to 10 wt.%, based on the total weight of the composition, preferably between 0.05 wt.% and 8 wt.%, more preferably between 0.1 wt.% and 6 wt.%, even more preferably between 0.25 wt.% and 4 wt.%, most preferably between 0.25 wt.% and 2.5 wt.%

### Oils or Solvents

The aerosol composition comprises one or more oils or solvents, preferably aliphatic, linearly conjugated or aromatic, within the oil phase in an amount of up to 80 wt.%, based on the total weight of the composition, preferably up to 40 wt.%, more preferably up to 20 wt.%, even more preferably between 1 wt.% and 15 wt.%, most preferably between 2.5 wt.% and 10 wt.%. Generally, the solvent will be water immiscible.

A wide range of oils or solvent materials may be used, although care should be exercised to ensure that the solvent does not adversely interact with any active components of the compositions of the invention, such as insecticides.

Examples of solvents that may be used in the compositions of the invention include:
- liquid n-paraffins, liquid isoparaffins, cycloalkanes, naphthene-containing solvents, white spirit, kerosene, ester solvents, silicone solvents or oils, fatty acids, dialkyl phthalates, C₅-C₁₁ alcohols and fatty alcohols. Specific examples of these are as follows:
   ∘ liquid n-paraffins - Norpar^{™} 12, Norpar^{™} 13 and Norpar^{™} 15 (available from Exxon)
   ∘ liquid isoparaffins - Isopar^{™} G, Isopar^{™} H, Isopar^{™} L, Isopar^{™} M and Isopar^{™} V (available from Exxon).
   ∘ Naphthene-containing solvents - Exxsol^{™} D40, Exxsol^{™} D60, Exxsol^{™} D80, Exxsol^{™} D100, Exxsol^{™} D110, Nappar 10, Solvesol 100, Solvesol 150, Solvesol 200 (available from Exxon)
   ∘ Ester solvents - such as alkyl acetates, examples being Exxate^{™} 1000, Exxate^{™} 1300 (available from Exxon), and Coasol (available from Chemoxy International);
   ∘ Silicone solvent oils - Dow Corning 244, 245, 344 and 345 fluids,
   ∘ Fatty alcohols - octanol, dodecanol, lauryl alcohol, myristyl alcohol, cetyl alcohol, stearyl alcohol, cetostearyl alcohol, oleyl alcohol.

Preferred solvents are liquid hydrocarbon solvents, n-paraffins, and iso-paraffins.

In a preferred embodiment, the one or more oils or solvents are selected from the group consisting of n-paraffins and iso-paraffins.

### Insecticidal compounds

A wide range of insecticidal compounds may be used of which pyrethroids, particularly synthetic pyrethroids, chlorpyrifos, propoxur and diazinon are preferred.

In a preferred embodiment, the at least one insecticidal compound is selected from the group consisting of cypermethrin, tetramethrin, permethrin, cyfluthrin, transfluthrin, allethrins, and combinations thereof; preferably selected from the group consisting of permethrin, cyfluthrin, transfluthrin, allethrins, and combinations thereof; more preferably selected from the group consisting of permethrin, cyfluthrin, transfluthrin, bioallethrin, esbiotrhin, and combinations thereof; even more preferably selected from the group consisting of permethrin, cyfluthrin, transfluthrin, esbiotrhin, and combinations thereof. The aerosol composition may comprise between 0.001 wt.% and 10 wt.% of the at least one insecticidal composition, based on the total weight of the composition, preferably between 0.005 wt.% and 5 wt.%, more preferably between 0.01 wt.% and 1 wt.%, even more preferably between 0.05 wt.% and 0.5%, most preferably between 0.05 wt.% 0.25 wt.%.

Preferably, insecticidal compounds will include an insecticide which functions primarily to knock down an insect, together with a second insecticide which functions primarily as a kill agent. An example of such a combination is the use of permethrin as a kill agent in a combination with tetramethrin as a knock down agent.

In a preferred embodiment the at least one insecticidal compound comprises or consists of:
- Allethrins, preferably esbiothrin, and permethrin, or
- Permethrin and transflutrin, or
- Cyfluthrin and transfluthrin.

### Optional ingredients

Various optional ingredients may be incorporated into the compositions of the present invention. For example, in order to maximise the effectiveness of the insecticidal activity of the compositions of the invention, synergists such as N-octylbicycloheptene dicarboximide and piperonyl butoxide may be included at a concentration of from 0.5 wt.% to 1.5 wt.%, based on the total weight of the composition, most preferably about 1.0 wt.%, for use in conjunction with pyrethroid insecticides.

In addition, other ingredients including corrosion inhibitors, such as 1-hydroxyethyl-2-heptadecenyl imidazoline and/or sodium benzoate, preferably in a concentration from 0.01 to 0.5 wt.%, preservatives and antioxidants, such as butylated hydroxytoluene, may be used as required. One or more fragrance components may also be included, according to the particular consumer requirements.

### Water

The composition according to the invention comprises water. In a preferred embodiment, the composition comprises between 10 wt.% and 80 wt.% of water, based on the total weight of the composition, preferably between 20 wt.% and 75 wt.%, more preferably between 30 wt.% and 70 wt.%, even more preferably between 40 wt.% and 65 wt.%, most preferably between 45 wt.% and 60 wt.%, such as for example, between 50 wt.% and 55 wt.%.

In the case of a water-in-oil emulsion, the person in the art will understand that the composition is an emulsion with a high dispersed-phase content.

In a second aspect, the present invention relates to a method of killing, repelling and/or reducing the quantity of insects in the air, wherein the insects are hidden flying insects; the method comprising spraying into the air an aerosol composition, wherein the composition is sprayed from an aerosol spray device which is mechanically operated under pressure, the aerosol spray device comprising:
i) a reservoir for accommodating the aerosol composition;
ii) a spraying head, in the form of an insert in an actuator, through which the aerosol composition is expelled in the form of a spray of droplets; and
iii) a conduit system for feeding the aerosol composition from the reservoir to the spraying head wherein:
   a) the spraying head has a bore through which the aerosol composition is expelled from the apparatus, the bore having an outlet having an L/a ratio of at least 10, where L is the length of the periphery defining the bore outlet in mm and a is the cross-sectional area of the bore outlet in mm²; and
   b) the apparatus is constructed such that the droplets are expelled from the spraying head at a flow rate of at least 0.5 g/s and have a charge to mass ratio of at least + /- 1 x 10⁻⁴ C/kg; and
iv) a tail piece which includes a vapour phase tap, which is an opening to enable gas in the reservoir to act directly on the aerosol composition, said opening having a diameter of at least 0.60 mm
wherein the aerosol composition is an electrically neutral composition in the form of a water-in-oil emulsion or an oil-in-water emulsion, in which droplets of the emulsion on discharge from the aerosol spray device are imparted with a unipolar electrostatic charge, the aerosol composition comprising:
a) at least one propellant in an amount of from 2 wt.% to 80 wt.%, based on the total weight of the composition; preferably between 10 wt.% and 70 wt.%, more preferably between 20 wt.% and 60 wt.%, even more preferably between 30 wt.% and 50 wt.%, most preferably between 35 wt.% and 45 wt.%.
b) at least one non-ionic surfactant in an amount of from 0.01 wt.% to 10 wt.%, based on the total weight of the composition, preferably between 0.05 wt.% and 8 wt.%, more preferably between 0.1 wt.% and 6 wt.%, even more preferably between 0.25 wt.% and 4 wt.%, most preferably between 0.25 wt.% and 2.5 wt.%;
c) one or more oils or solvents, preferably aliphatic, linearly conjugated or aromatic, within the oil phase in an amount of up to 80 wt.%, based on the total weight of the composition, preferably up to 40 wt.%, more preferably up to 20 wt.%, even more preferably between 1 wt.% and 15 wt.%, most preferably between 2.5 wt.% and 10 wt.%;
d) at least one insecticidal compound; and
e) water.

In a preferred embodiment, the aerosol composition is in the form of a water-in-oil emulsion. This reduces chemical interaction of the reservoir that accommodates the composition.

Spraying apparatus for producing a spray of liquid droplets are well known. For example, such apparatus is known in the domestic environment for producing sprays of droplets of insecticides or polish or air freshening compositions. Generally, such apparatus includes a reservoir for accommodating the liquid composition to be sprayed, a spraying head including a bore through which the composition is expelled in the form of a spray of droplets, and a conduit system whereby the composition can pass from the reservoir to the spraying head. The apparatus may preferably be in the form of an aerosol in which case it includes gas under pressure, possibly in a liquid state, which expels the liquid composition (to be sprayed) from the reservoir to the spraying head and then out of the spraying head in the form of a spray of droplets.

Generally, the droplets leaving the spraying head have a small electrostatic charge created by electron transfer between the liquid and the walls of the apparatus. As described in WO99/01227, it is necessary to increase the level of charge on the droplets significantly to enable electrostatic attraction to insects and to other objects to occur, thereby enabling enhanced targeting by the spray and also allowing greater dispersion of the droplets in the air.

In the method of killing, repelling and/or reducing the quantity of insects in the air, according to the invention, where in the insects are hidden flying insects, the liquid droplets that are expelled from the spraying head have a charge to mass ratio of at least +/- 1 x 10⁻⁴ C/kg, preferably at least +/- 1.5 x 10⁻⁴ C/kg. The higher the charge to mass ratio of the liquid droplets, the more effective the liquid droplets will be for their intended use, such as targeting insects. This charge level is considerably higher than the charge level which is achieved when spraying conventional liquid formulations from conventional aerosol spray device where charge levels of the order of +/- 1 x 10⁻⁵ to +/- 1 x 10⁻⁸ C/kg are obtained.

In the aerosol spray device, the bore outlet is the end of the bore through which the composition is expelled in the form of a spray from the device.

Whilst it is known that reducing the cross-sectional area of a circular orifice through which a liquid is sprayed will increase the charge on the liquid sprayed through the orifice, in order to achieve the charge required by the present invention it would be necessary to reduce the cross-sectional area of the orifice to such an extent that the spray rate would decrease. In putting the invention into practice, the spray rate is maintained at least at 0.5 g/s. For a circular orifice, this spray rate can only be achieved at the same time as achieving the charge required by the present invention by using propellant at a much higher pressure than that which is normally used in spray devices, i.e., typically 40 psi. Preferably, orifices which have a tortuous periphery are used whilst maintaining a large cross-sectional area. In this manner, the spray rate can be maintained at above 0.5 g/s using propellant pressures normally used in spray devices.

The present inventors have observed that when the propellant is LPG, a pressure of at least 46 psi in the device is needed to obtain the desired charge levels in the droplets leaving the spraying head. Hence, in an embodiment, the propellant comprises or consists of LPG and the pressure in the aerosol spray device is of at least 46 psi.

The periphery of the bore outlet is thus preferably tortuous and the flow of the liquid over the tortuous surface assists in the liquid becoming charged by double layer charging. Using a bore with tortuous periphery can lead to a L/a ratio that is too low, causing that the flow rate of the droplets expelled from the spraying head be lower than 0.5 g/s. Hence, the aerosol spray device should be constructed in such a way that the L/a ratio is of at least 10 and the flow rate of the droplets that are expelled from the spraying head is of at least 0.5 grams per second.

In an embodiment, the L/a ratio is of at least 12.

In a preferred embodiment, the flow rate of the aerosol composition sprayed from the aerosol spray device is of at least 1 g/s, preferably between 1g/s and 10g/s, more preferably between 1.25 g/s and 5 g/s, even more between 1.5 g/s and 2.5 g/s.

The aerosol spray device includes a gas under pressure, for example liquefied petroleum gas, e.g., butane and/or propane, LPG, in the reservoir. The spraying head of the device forms part of an actuator, operable by the user, of a valve assembly to cause the composition in the reservoir to be expelled from the spraying head in the form of droplets. Thus, by moving the actuator from a first rest position to a second actuating position, the pressure in the reservoir is released and the gas forces the composition from the reservoir, along the conduit system, to the spraying head and then out of the spraying head in the form of a spray of liquid droplets or slurry. The aerosol spray device is preferably in the form of an aerosol can which is of a size suitable to be held in the hand and used in domestic situations.

The actuator generally comprises a body portion including a recess for accommodating the insert (as a part of the spraying head) including the bore and preferably a swirl chamber through which the liquid passes prior to reaching the bore. The recess is in communication with a valve stem communicating with a tail piece which in turn is in communication with a dip tube extending into the reservoir. Thus, the composition can pass from the reservoir to the bore of the spraying head via conduit system comprising the dip tube, the tail piece, the valve stem, the actuator recess and the nozzle swirl chamber (if present).

It is possible to impart even higher charges to the liquid droplets by choosing aspects of the aerosol device including the material, shape and dimensions of the actuator, the actuator insert, the valve and the dip tube and the characteristics of the liquid which is to be sprayed, so that the required level of charge is generated as the liquid is dispersed as droplets.

The valve stem includes one or more orifices linking the valve stem with the tail piece and the tail piece includes one or more orifices linking the tail piece with the dip tube and the nature of these orifices and the diameter of the dip tube influence the charge given to the liquid. More particularly, the smaller the size of the or each stem orifice and the fewer the stem orifices, the greater is the contact area between the valve stem and the composition and hence the greater is the charge in the composition.

The aerosol spray device has a vapour phase tap, which influences the turbulence. A vapour tap is quite conventional in aerosol spraying apparatus and it comprises an orifice enabling the gas pressure to act directly on the composition in the conduit system linking the reservoir and the spraying head bore. The orifice is provided in the tail piece of the valve assembly. The vapour phase tap has a diameter of at least 0.60 mm, preferably between 0.60 mm and 2 mm, more preferably between 0.65 m and 1.5 mm, even more preferably between 0.7 mm and 1.25 mm, most preferably between 0.7 mm and 1.1 mm.

It is known that the degree of turbulence experienced by the composition as it flows through the spray device influences the charge on the liquid droplets leaving the spraying head. The turbulence is able to dissipate the electrical charge of the double layer, that forms at the liquid/apparatus interface, more effectively within the bulk of the liquid thereby encouraging further electron transfer between the composition and device. Hence, by increasing the degree of turbulence, the charge of the liquid droplets leaving the spraying head is increased.

Furthermore, characteristics of the actuator can be optimised to increase the charge levels on the liquid sprayed from the container. The actuator of the aerosol spray device has an insert, which may be made of any polymeric material, such as acetal, polyester, polyvinyl chloride (PVC), nylon or polypropylene. In a preferred embodiment the insert is made of acetal. In a most preferred embodiment, the actuator is made of polypropylene and the insert is made of acetal. The insert has a bore, which has a diameter of between 0.5 mm and 3.0 mm, preferably between 0.75 mm and 2.5 mm, more preferably between 1.0 mm and 2.0 mm, even more preferably between 1.5 and 2.0 mm.

In a preferred embodiment, the actuator is made of polypropylene and the insert is made of acetal, wherein the actuator has an insert having a bore with a diameter of between 0.5 mm and 3.0 mm, preferably between 0.75 mm and 2.5 mm, more preferably between 1.0 mm and 2.0 mm, even more preferably between 1.5 and 2.0 mm.

The characteristics of the dip tube can be optimised to increase charge levels in the liquid sprayed from the container. A narrow dip tube, of for example about 1.27 mm internal diameter, increases the charge levels on the liquid.

The liquid droplets sprayed from the aerosol spray device will generally have an average droplet size (diameter) in the range of from 5 µm to 100 µm, with a peak of droplets of about 40 micrometres. In an embodiment, the liquid droplets sprayed from the aerosol spray device have an average particle size (diameter) of between 10 µm to 100 µm, preferably between 20 µm to 80 µm, more preferably between 25 µm to 60 µm, even more preferably between 30 µm to 50 µm.

The aerosol composition may be sprayed into the air in a room having a volume of at most 100 m³, preferably at most 75 m³, more preferably at most 50 m³, even more preferably at most 30 m³, most preferably at most 20 m³. It will be understood that the aerosol composition is not sprayed directly onto the flying insects as the insects will be hidden, e.g., located behind a curtain, inside a piece of furniture, or behind or between clothes.

The total amount of aerosol composition that is sprayed in one application of the aerosol may be between 0.5 g and 30 g, preferably between 1 g and 20 g, more preferably between 2.5 g and 15 g, even more preferably between 3 g and 10 g, most preferably between 4 g and 8 g.

As the flying insects are hidden, the aerosol composition may be sprayed into the air at a distance of at least 1m from the place where the flying insects are located, preferably at least 1.5 m, more preferably at least 2 m, even more preferably at a distance between 2m and 3m.

It will be understood that the embodiments relating to the aerosol composition can be applied to the first and the second aspect of the invention. The same occurs with the embodiments relating to the aerosol spray device.

The aerosol spray device may be more readily understood with the accompanying drawings, in which:
- Figure 1 is a diagrammatic cross-section through an aerosol spray device; and
- Figure 2 is a cross-section through the valve assembly of Figure 1 illustrating some of the components in greater detail.

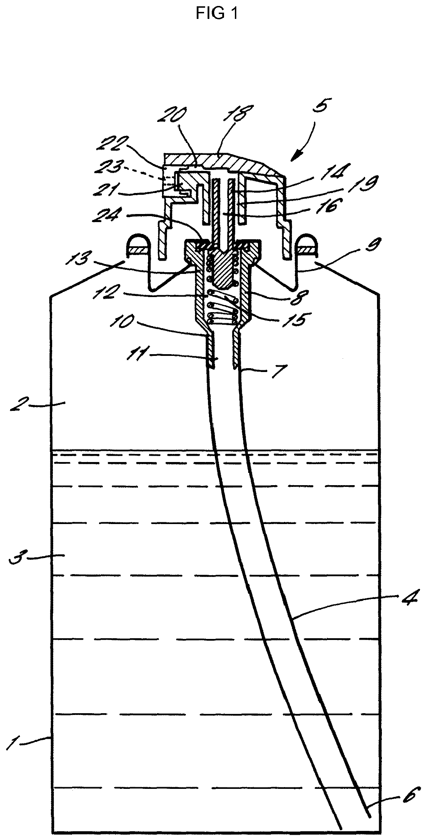

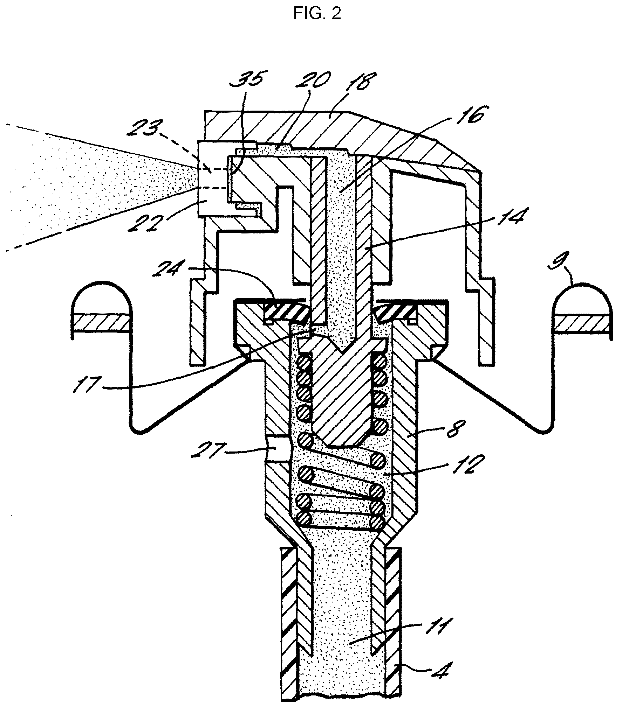

Figures 1 and 2 show an aerosol spray device as used in the method according to the invention. It comprises a can 1, which may be formed of aluminium or lacquered or unlacquered tin plate or the like in conventional manner, defining a reservoir 2 for an aerosol composition 3 which is an electrically neutral composition in the form of a water-in-oil or an oil-in-water emulsion, in which droplets of the emulsion on discharge from the aerosol spray device are imparted with a unipolar electrostatic charge. Also located in the can is a gas under pressure which is capable of forcing the aerosol composition 3 out of the can 1 via a conduit system comprising a dip tube 4 and a valve and actuator assembly 5. The dip tube 4 includes one end 6 which terminates at a bottom peripheral part of the can 1 and another end 7 which is connected to a tail piece 8 of the valve assembly. The tail piece 8 is secured by a mounting assembly 9 fitted in an opening in the top of the can and includes a lower portion 10 defining a tail piece orifice 11 to which end 7 of the dip tube 4 is connected. The tail piece includes a bore 12 of relatively narrow diameter at lower portion 11 and a relatively wider diameter at its upper portion 13.

The valve assembly also includes a stern pipe 14 mounted within the bore 12 of the tail piece and arranged to be axially displaced within the bore 12 against the action of spring 15. The valve stern 14 includes an internal bore 16 having one or more lateral openings (stern holes) 17 (see Figure 2).

The valve assembly includes an actuator 18 having a central bore 19 which accommodates the valve stern 14 such that the bore 16 of the stem pipe 14 is in communication with bore 19 of the actuator. A passage 20 in the actuator extending perpendicularly to the bore 19 links the bore 19 with a recess including a post 21 on which is mounted a spraying head in the form of an insert 22 including a bore 23 which is in communication with the passage 20.

A ring 24 of elastomeric material is provided between the outer surface of the valve stern 14 and, ordinarily, this sealing ring closes the lateral opening 17 in the valve stern 14. The construction of the valve assembly is such that when the actuator 18 is manually depressed, it urges the valve stern 14 downwards against the action of the spring 15 as shown in Figure 2 so that the sealing ring 24 no longer closes the lateral opening 17. In this disposition, a path is provided from the reservoir 2 to the bore 23 of the spraying head so that liquid can be forced, under the pressure of the gas in the can, to the spraying head via a conduit system comprising the dip tube 4, the tail piece bore 12, the valve stem bore 16, the actuator bore 19, and the passage 20.

An orifice 27 (not shown in Figure 1) is provided in the wall of the tail piece 8 and constitutes a vapour phase tap whereby the gas pressure in the reservoir 2 can act directly on the liquid flowing through the valve assembly. This increases the turbulence of the liquid.

Preferably the lateral opening 17 linking the valve stem bore 16 to the tail piece bore 12 is in the form of 2 orifices each having a diameter of not more than 0.51mm to enhance electrostatic charge generation. Further, the diameter of the dip tube 4 is preferably as small as possible, for example 1.2mm, in order to increase the charge imparted to the liquid. Also, charge generation is enhanced if the diameter of the tail piece orifice 11 is as small as possible e.g., not more than about 0.6mm.

The foregoing aspects may be freely combined with any of the foregoing aspects disclosed herein.

The invention will be further described, by way of example, with the reference to the following non-limiting embodiments.

### Examples

### Compositions

Three compositions were prepared by firstly mixing the at least one non-ionic surfactant, the one or more oils or solvents and the at least one insecticidal compound to form a first mixture. The first mixture is then mixed with water to product a water-in-oil emulsion, which is the filled into cans and blended with the at least one propellant.

The following aerosol compositions were prepared

**Table 1. Aerosol compositions**

| **Ingredient** | **Wt.% based on the total weight of the composition** | | |
|---|---|---|---|
| | **Composition 1** | **Composition 2** | **Composition 3** |
| Oil or Solvent | 7.5 | 6.0 | 3.1 |
| Non-ionic surfactant | 0.9 | 2.1 | 0.3 |
| Esbiothrin | 0.11 | | |
| Permethrin | 0.05 | 0.09 | |
| Cyfluthrin | | | 0.02 |
| Transfluthrin | | 0.04 | 0.04 |
| Water | 51.42 | 51.72 | 52.86 |
| Propellant | 40 | 40 | 40 |
| Additives | q.s. | q.s. | q.s. |

In Table 1:
- The oil or solvent is selected from n-paraffin, iso-paraffin, and combinations thereof.
- The non-ionic surfactant is selected from: Cithrol PG430, Polyglycerol oleate ester, lauryl pyrrolidone, Tween 80, Span 20, and combinations thereof.
- The additives are selected from: preservatives such as butylated hydroxytoluene, alcohols and aromatic organic compounds. It will be understood that these additives are added in an amount of less than 5 wt.%, based on the total weight of the composition and they do not play a role in the unipolar electrostatic charge that is imparted with the aerosol composition discharges from an aerosol spray device.

### Performance tests

The performance of the compositions shown in Table 1 was determined using the Knock-down test for hidden insects. Comparative spraying formulation were also tested:
Comparative A: commercial product *Raid Australia,* comprising 0.405 wt.% tetramethrin, 0.09 wt.% d-phenothrin, and 0.09 wt.% allethrin.
Comparative B: commercial product *Raid Multi Insectos Base Aqua,* comprising 0.102wt.% prallethrin and 0.125 wt.% d-phenothrin.

The compositions of Table 1 were sprayed from an aerosol spray device as described in WO 99/01227.

The aerosol device for spraying composition 1 had a vapour phase tap with a diameter of 0.7 mm. The aerosol device for spraying composition 2 had a vapour phase tap with a diameter of 1.02mm. In both aerosol devices spraying heads with an acetal insert in the actuator were used which had a bore with a diameter of 1.65 mm.

The L/a ratio of both aerosol devices is higher than 10.

Table 2 shows the %KD determined using the Knock-down test for hidden insects. The values reported on this table correspond to the average of three experiments; in other words, each composition was tested three times.

**Table 2. % KD for compositions according to the invention and comparative compositions.**

| Time (min) | % KD | | | |
|---|---|---|---|---|
| | Comparative A | Composition 1 | Comparative B | Composition 2 |
| 1 | 0 | 0 | 0 | 0 |
| 2 | 0 | 0 | 0 | 0 |
| 3 | 0 | 0 | 0 | 0 |
| 4 | 0 | 0 | 0 | 0 |
| 5 | 0 | 0 | 0 | 0 |
| 10 | 0 | 20.0 | 0 | 40 |
| 15 | 6.7 | 53.3 | 0 | 73.3 |
| 20 | 20.0 | 80.0 | 0 | 93.3 |
| 25 | 40.0 | 100.0 | 0 | 100 |
| 30 | 60.0 | 100.0 | 20 | 100 |
| | | | | |
| Amount sprayed (g) | 4.67 | 6.16 | 6.32 | 5.05 |

For all formulations 1-3 as shown in Table 1, once the droplets were expelled from the aerosol spray device, these had a charge to mass ratio higher than 1.5x10⁻⁴ C/kg. The charge to mass ratios were measured following the method described in WO01/18145.

Hence one or more objects of the present invention are achieved by the present which is further elucidated in the appended claims.

## Claims

1. Use of an aerosol composition to kill, knockdown and/or repel hidden flying insects, wherein the composition is an electrically neutral composition in the form of a water-in-oil emulsion or an oil-in-water emulsion, in which droplets of the emulsion on discharge from an aerosol spray device are imparted with a unipolar electrostatic charge, which composition comprises:
a) at least one propellant in an amount of from 2 wt.% to 80 wt.%, based on the total weight of the composition; preferably between 10 wt.% and 70 wt.%, more preferably between 20 wt.% and 60 wt.%, even more preferably between 30 wt.% and 50 wt.%, most preferably between 35 wt.% and 45 wt.%.
b) at least one non-ionic surfactant in an amount of from 0.01 wt.% to 10 wt.%, based on the total weight of the composition, preferably between 0.05 wt.% and 8 wt.%, more preferably between 0.1 wt.% and 6 wt.%, even more preferably between 0.25 wt.% and 4 wt.%, most preferably between 0.25 wt.% and 2.5 wt.%;
c) one or more oils or solvents, preferably aliphatic, linearly conjugated or aromatic, within the oil phase in an amount of up to 80 wt.%, based on the total weight of the composition, preferably up to 40 wt.%, more preferably up to 20 wt.%, even more preferably between 1 wt.% and 15 wt.%, most preferably between 2.5 wt.% and 10 wt.%;
d) at least one insecticidal compound; and
e) water.

2. Use according to claim 1, wherein the composition comprises between 10 wt.% and 80 wt.% of water, based on the total weight of the composition, preferably between 20 wt.% and 75 wt.%, more preferably between 30 wt.% and 70 wt.%, even more preferably between 40 wt.% and 65 wt.%, most preferably between 45 wt.% and 60 wt.%, such as for example, between 50 wt.% and 55 wt.%.

3. Use according to claim 1 or claim 2, wherein the at least one non-ionic surfactant is selected from the group consisting of polyglyceryl fatty acid esters, polyoxyethylene sorbitan monooleate, sorbitan monooleate, and combinations thereof.

4. Use according to any of the preceding claims, wherein the one or more oils or solvents are selected from the group consisting of n-paraffins and iso-paraffins.

5. Use according to any of the preceding claims, wherein the at least one insecticidal compound is selected from the group consisting of cypermethrin, tetramethrin, permethrin, cyfluthrin, transfluthrin, allethrins, and combinations thereof; preferably selected from the group consisting of permethrin, cyfluthrin, transfluthrin, allethrins, and combinations thereof; more preferably selected from the group consisting of permethrin, cyfluthrin, transfluthrin, bioallethrin, esbiothrin, and combinations thereof; even more preferably selected from the group consisting of permethrin, cyfluthrin, transfluthrin, esbiothrin, and combinations thereof.

6. Use according to any of the preceding claims, wherein insecticidal compound comprises or consists of:
• allethrins, preferably esbiothrin, and permethrin, or
• permethrin and transflutrin, or
• cyfluthrin and transfluthrin.

7. Use according to any of the preceding claims, wherein the composition comprises between 0.001 wt.% and 10 wt.% of the at least one insecticidal compound, based on the total weight of the composition, preferably between 0.005 wt.% and 5 wt.%, more preferably between 0.01 wt.% and 1 wt.%, even more preferably between 0.05 wt.% and 0.5%, most preferably between 0.05 wt.% 0.25 wt.%.

8. Use according to any of the preceding claims, wherein the flying insects are mosquitoes, preferably mosquitoes of the genus *Aedes,* more preferably of the species *Aedes aegypti.*

9. Method of killing, repelling and/or reducing the quantity of insects in the air, wherein the insects are hidden flying insects; the method comprising spraying into the air an aerosol composition, wherein the composition is sprayed from an aerosol spray device which is mechanically operated under pressure, the aerosol spray device comprising:
i) a reservoir (2) for accommodating the aerosol composition (3);
ii) a spraying head, in the form of an insert (22) in an actuator (18), through which the aerosol composition (3) is expelled in the form of a spray of droplets; and
iii) a conduit system for feeding the aerosol composition from the reservoir (2) to the spraying head wherein:
a) the spraying head has a bore (23) through which the aerosol composition is expelled from the apparatus, the bore (23) having an outlet having an L/a ratio of at least 10, where L is the length of the periphery defining the bore outlet in mm and a is the cross sectional area of the bore outlet in mm² ; and
b) the apparatus is constructed such that the droplets are expelled from the spraying head at a flow rate of at least 0.5 g/s and have a charge to mass ratio of at least + /- 1 x 10⁻⁴ C/kg; and
iv) a tail piece (8) which includes a vapour phase tap (27), which is an opening to enable gas in the reservoir to act directly on the aerosol composition, said opening having a diameter of at least 0.60 mm
wherein the aerosol composition (3) is an electrically neutral composition in the form of a water-in-oil emulsion or an oil-in-water emulsion, in which droplets of the emulsion on discharge from the aerosol spray device are imparted with a unipolar electrostatic charge, the aerosol composition comprising:
a) at least one propellant in an amount of from 2 wt.% to 80 wt.%, based on the total weight of the composition; preferably between 10 wt.% and 70 wt.%, more preferably between 20 wt.% and 60 wt.%, even more preferably between 30 wt.% and 50 wt.%, most preferably between 35 wt.% and 45 wt.%.
b) at least one non-ionic surfactant in an amount of from 0.01 wt.% to 10 wt.%, based on the total weight of the composition, preferably between 0.05 wt.% and 8 wt.%, more preferably between 0.1 wt.% and 6 wt.%, even more preferably between 0.25 wt.% and 4 wt.%, most preferably between 0.25 wt.% and 2.5 wt.%;
c) one or more oils or solvents, preferably aliphatic, linearly conjugated or aromatic, within the oil phase in an amount of up to 80 wt.%, based on the total weight of the composition, preferably up to 40 wt.%, more preferably up to 20 wt.%, even more preferably between 1 wt.% and 15 wt.%, most preferably between 2.5 wt.% and 10 wt.%;
d) at least one insecticidal compound; and
e) water.

10. Method according to claim 9, wherein the L/a ratio is at least 12.

11. Method according to claim 9 or claim 10, wherein the vapour phase tap has a diameter of between 0.60 mm and 2mm, more preferably between 0.65 mm and 1.5 mm, even more preferably between 0.7 mm and 1.25 mm, most preferably between 0.7 mm and 1.1 mm.

12. Method according to any of the claim 9-11, wherein the insert is made of a polymeric material, preferably a polymeric material selected from the group consisting of acetal, polyester, polyvinyl chloride, nylon, polypropylene, and combinations thereof, more preferably the insert is made of acetal.

13. Method according to any of the claims 9-12, wherein the flow rate of the aerosol composition sprayed from the aerosol spray device is of at least 1 g/s, preferably between 1g/s and 10g/s, more preferably between 1.25 g/s and 5 g/s, even more preferably between 1.5 g/s and 2.5 g/s.

14. Method according to any of the claims 9-13, wherein the composition is sprayed into the air in a room having a volume of at most 100 m³, preferably at most 75 m³, more preferably at most 50 m³, even more preferably at most 30 m³, most preferably at most 20 m³.

15. Method according to any of the claims 9-14, wherein the composition is sprayed into the air at a distance of at least 1m from the place where the flying insects are located, preferably at least 1.5 m, more preferably at least 2 m, even more preferably at a distance between 2 m and 3 m.
